# EUROPÄISCHE PATENTANMELDUNG

(11) **EP 4 653 749 A1**
(43) Veröffentlichungstag der Anmeldung: **26.11.2025**
(21) Anmeldenummer: 25165272.3
(22) Anmeldetag: 21.03.2025
(51) Int. Cl.: F16P 3/14, B66F 9/00

(54) **ÜBERWACHUNGSEINRICHTUNG**

(30) Priorität: 24.05.2024 DE 202024102711 U
(71) Anmelder: Leuze electronic GmbH + Co. KG, 73277 Owen/Teck (DE)
(72) Erfinder: Eder, Alexander, 86928 Hofstetten (DE); Bristle, Matthias, 73249 Wernau (DE); Lejcek, Pavel, 70800 Ostrava (CZ)
(74) Vertreter: Ruckh, Rainer Gerhard

(57) **Zusammenfassung**

Die Erfindung betrifft eine Überwachungseinrichtung (1) mit einem Sicherheitssensor mittels dessen ein Zugangsbereich (6) zu einem Gefahrenbereich (2) an einer von einer Steuereinheit gesteuerten Anlage überwacht wird. Die Ausgangssignale des Sicherheitssensors sind der Steuereinheit zugeführt. Der Sicherheitssensor bei einem Objekteingriff aktiviert im Zugangsbereich (6) ein Objektfeststellungssignal, mittels dessen die Steuereinheit die Anlage stillsetzt. Es sind Sensormittel vorhanden, deren Ausgangssignale der Steuereinheit zugeführt sind. Mit den Sensormitteln wird ein Innenbereich im Gefahrenbereich (2) und ein Außenbereich außerhalb des Gefahrenbereichs (2) überwacht. Die Sensormittel aktivieren bei einem Objekteingriff im Innenbereich und bei einem Objekteingriff im Außenbereich jeweils ein Objektfeststellungssignal. Nach Stillsetzen der Anlage wird mittels der Steuereinheit ein automatischer Wiederanlauf der Anlage dann durchgeführt, wenn zuerst in einer ersten Sequenz die Sensormittel für den Außenbereich und der Sicherheitssensor unabhängig von der Reihenfolge jeweils ein Objektfeststellungssignal aktivieren und danach die Sensormittel für den Innenbereich ein Objektfeststellungssignal aktiveren, und wenn in einer auf die erste Sequenz folgenden zweiten Sequenz die Sensormittel für den Innenbereich das Objektfeststellungssignal deaktivieren und danach die Sensormittel für den Außenbereich und der Sicherheitssensor unabhängig von der Reihenfolge jeweils das Objektfeststellungssignal deaktivieren.

## Beschreibung

Die Erfindung betrifft eine Überwachungseinrichtung.

Eine derartige Überwachungseinrichtung weist einen Sicherheitssensor auf, mit dem ein Zugangsbereich zu einem Gefahrenbereich an einer Anlage abgesichert wird. Die Anlage wird von einer Steuereinheit, insbesondere einer Sicherheitssteuerung gesteuert.

Der Gefahrenbereich ist typischerweise mit einer Umzäunung so gesichert, dass nur über den Zugangsbereich Personen oder Objekte in den Gefahrenbereich gelangen können.

Mit dem Sicherheitssensor, der insbesondere in Form eines Lichtvorhangs ausgebildet ist, wird eine Sicherheitsfunktion bereitgestellt. Dabei wird mit dem Sicherheitssensor der gesamte Zugangsbereich überwacht. Dabei generiert der Sicherheitssensor als Ausgangssignal ein binäres Schaltsignal, dessen Schaltzustände angeben, ob sich ein Objekt im Zugangsbereich befindet oder nicht. Wird mit dem Sicherheitssensor ein Objekt im Zugangsbereich erkannt, nimmt das Schaltsignal einen entsprechenden Schaltzustand an, d.h. das Schaltsignal ist ein Objektfeststellungssignal, das eine Objekterkennung meldet. Dieses Objektfeststellungssignal wird an die Steuereinheit ausgegeben, die dann die Anlage stillsetzt, so dass von dieser keine Gefahren mehr ausgehen können.

Um danach die Anlage wieder starten zu können, muss üblicherweise eine Bedienperson kontrollieren, ob der Gefahrenbereich frei ist und dann manuell Schaltmittel betätigen, wodurch der Wiederanlauf der Anlage freigegeben wird.

Dies ist umständlich und erfordert einen zusätzlichen Personalaufwand zur manuellen Interaktion mit der Anlage. Zudem führt dieses Vorgehen zu unerwünscht langen Stillstandszeiten der Anlage.

Daher ist es wünschenswert einen automatischen Wiederanlauf der Anlage durchzuführen. Hierbei ist es jedoch erforderlich das notwendige Sicherheitsniveau zu erzielen. Insbesondere muss gewährleistet sein, dass bei dem automatischen Wiederanlauf der Anlage keine Gefahren für Personen bestehen.

In der Norm prEN415-42018 wird ein Vorschlag für einen automatischen Wiederanlauf einer Anlage in Form eines Paletten-Magazins gemacht. Bei einem derartigen Paletten-Magazin transportiert ein Gabelstapler Paletten in den Gefahrenbereich des Paletten-Magazins. Um nach einem Stillstand der Anlage einen automatischen Wiederanlauf der Anlage zu ermöglichen, muss kontrolliert werden, ob ein in den Gefahrenbereich eingefahrener Gabelstapler den Gefahrenbereich auch wieder verlassen hat.

Hierzu ist in einem Innenbereich im Gefahrenbereich und in einem Außenbereich außerhalb des Gefahrenbereichs jeweils eine Induktionsschleife im Boden verlegt, mit denen metallische Objekte, insbesondere der Gabelstapler detektiert werden. Die Induktionsschleifen generieren wie der Sicherheitssensor jeweils Schaltsignale.

Als zulässige Sequenzen des Ein- und Ausfahrens des Gabelstaplers in den Gefahrenbereich und aus dem Gefahrenbereich, die einen automatischen Wiederanlauf der Anlage auslösen, werden dabei gefordert.
a) Einfahren des Gabelstaplers,
   - die Induktionsschleife des Außenbereichs generiert, d.h. aktiviert ein Objektfeststellungssignal.
   - der Sicherheitssensor generiert ein Objektfeststellungssignal.
   - die Induktionsschleife des Innenbereichs generiert ein Objektfeststellungssignal.
b) Ausfahren des Gabelstaplers,
   - das Objektfeststellungssignal der Induktionsschleife des Innenbereichs wird deaktiviert.
   - das Objektfeststellungssignal des Sicherheitssensors wird deaktiviert.
   - das Objektfeststellungssignal der Induktionsschleife des Außenbereichs wird deaktiviert.

Diese geforderten Sequenzen werden jedoch dann nicht eingehalten, wenn der Gabelstapler so lange Gabeln aufweist, dass diese in den vom Sicherheitssensor überwachten Zugangsbereich eindringen bevor das Fahrwerk des Gabelstaplers im Bereich der Induktionsschleife des Außenbereichs ist.

Dies führt dazu, dass obwohl der Gabelstapler ordnungsgemäß in den Gefahrenbereich eingefahren und wieder aus diesem ausgefahren ist, der automatische Wiederanlauf der Anlage nicht freigegeben wird.

Der Erfindung liegt die Aufgabe zugrunde eine Überwachungseinrichtung für eine Anlage bereitzustellen, bei welcher ein automatischer Wiederanlauf bei hoher Verfügbarkeit der Anlage ermöglicht ist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem Sicherheitssensor mittels dessen ein Zugangsbereich zu einem Gefahrenbereich an einer von einer Steuereinheit gesteuerten Anlage überwacht wird. Die Ausgangssignale des Sicherheitssensors sind der Steuereinheit zugeführt. Der Sicherheitssensor aktiviert bei einem Objekteingriff im Zugangsbereich ein Objektfeststellungssignal, mittels dessen die Steuereinheit die Anlage stillsetzt. Es sind Sensormittel vorhanden, deren Ausgangssignale der Steuereinheit ebenfalls zugeführt sind. Mit dem Sensormittel wird ein Innenbereich im Gefahrenbereich und ein Außenbereich außerhalb des Gefahrenbereichs überwacht. Die Sensormittel aktivieren bei einem Objekteingriff im Innenbereich und bei einem Objekteingriff im Außenbereich jeweils ein Objektfeststellungssignal. Nach Stillsetzen der Anlage wird mittels der Steuereinheit ein automatischer Wiederanlauf der Anlage dann durchgeführt, wenn zuerst in einer ersten Sequenz die Sensormittel für den Außenbereich und der Sicherheitssensor unabhängig von der Reihenfolge jeweils ein Objektfeststellungssignal aktivieren und danach die Sensormittel für den Innenbereich ein Objektfeststellungssignal aktivieren. Wenn in einer auf die erste Sequenz folgenden zweiten Sequenz die Sensormittel für den Innenbereich das Objektfeststellungssignal deaktivieren und danach die Sensormittel für den Außenbereich und der Sicherheitssensor unabhängig von der Reihenfolge jeweils das Objektfeststellungssignal deaktivieren wird der automatische Wiederanlauf der Anlage freigegeben.

Die erfindungsgemäße Überwachungseinrichtung weist einen Sicherheitssensor auf, mit dem eine Sicherheitsfunktion derart bereitgestellt wird, dass ein Zugangsbereich zu einem Gefahrenbereich an einer von einer Steuereinheit gesteuerten Anlage überwacht wird. Abhängig davon, ob ein Objekt oder eine Person im Zugangsbereich vorhanden ist generiert der Sicherheitssensor ein binäres Schaltsignal, dessen Schaltzustände abhängig davon sind, ob im Zugangsbereich ein Objekteingriff vorhanden ist oder nicht. Der Schaltzustand des Schaltsignals bei einer Objekterkennung im Zugangsbereich stellt ein Objektfeststellungssignal dar. Wird dieses Objektfeststellungssignal an die Steuereinheit, die vorteilhaft eine Sicherheitssteuerung ist, ausgegeben, setzt die Steuereinheit die Anlage still, so dass von dieser keine Gefahren mehr ausgehen.

Vorzugsweise ist der Sicherheitssensor ein sicherer optoelektronischer Sensor (z.B. ein Sicherheits-Lichtvorhang) oder basiert auf einem sicheren elektromagnetischen Sensorprinzip (z.B. sicherer Radarsensor).

Erfindungsgemäß wird bei der erfindungsgemäßen Überwachungseinrichtung ein automatischer Wiederanlauf der Anlage nur dann ermöglicht, wenn sichergestellt ist, dass die vordefinierte Sequenz eingehalten wurde und durch eine Person alleine (ohne bewusste Manipulation) nicht möglich ist.

Hierzu weist die Überwachungseinrichtung Sensormittel auf, mit denen separat ein Außenbereich außerhalb des Gefahrenbereichs und ein Innenbereich innerhalb des Gefahrenbereichs überwacht wird. Abhängig davon, ob ein Objekteingriff im Außenbereich erfolgt, generieren die Sensormittel ein binäres Schaltsignal. Ebenso generieren die Sensormittel abhängig davon, ob ein Objekteingriff im Innenbereich erfolgt, ein binäres Schaltsignal. Diese Schaltsignale, die an die Steuereinheit ausgegeben werden, sind entsprechend dem Schaltsignal des Sicherheitssensors ausgebildet, d.h. das jeweilige Schaltsignal bei Registrieren eines Objekts ist ein Objektfeststellungssignal.

Ein automatischer Wiederanlauf der Anlage wird in der Steuereinheit nur dann freigegeben, wenn mit den Sensormitteln und dem Sicherheitssensor eine gültige erste Sequenz von Objektfeststellungssignalen bei Einfahren eines Objekts in den Gefahrenbereich und danach eine gültige zweite Sequenz vom Objektfeststellungssignal bei Ausfahren des Objekts aus dem Gefahrenbereich registriert wird.

Zur Erhöhung der Sicherheit für die Freigabe des automatischen Wiederanlaufs kann gefordert werden, dass für die beiden Sequenzen Zeitlimits eingehalten werden müssen, um den automatischen Wiederanlauf freizugeben.

Erfindungsgemäß wird bei den Sequenzen keine strikte Reihenfolge von Aktivierungen oder Deaktivierungen von Objektfeststellungssignalen der Sensormittel für den Außenbereich, des Sicherheitssensors und der Sensormittel für den Innenbereich gefordert.

Vielmehr wird eine Toleranz in der Aktivierung und Deaktivierung von Objektfeststellungssignalen derart zugelassen, dass bei Einfahren des Objekts in den Gefahrenbereich wahlweise zuerst das Objektfeststellungssignal der Sensormittel für den Außenbereich oder das Objektfeststellungssignal des Sicherheitssensors aktiviert wird, wonach das Objektfeststellungssignal für den Innenbereich aktiviert wird. Entsprechendes gilt für die Sensormittel für den Innenbereich und Außenbereich und den Sicherheitssensor bei Ausfahren des Objekts aus dem Gefahrenbereich für die Deaktivierung der Objektfeststellungssignale.

Dadurch wird eine Toleranz der beiden Sequenzen bereitgestellt, die spezifischen Geometrien von Objekten, insbesondere Fahrzeugen, die in den Gefahrenbereich ein- und ausfahren Rechnung tragen.

Je nach Konstruktion des Objekts, insbesondere Fahrzeugs kann bei dessen Annäherung an den Gefahrenbereich ein Objektfeststellungssignal des Sicherheitssensors aktiviert werden, bevor die Sensormittel für den Außenbereich ein Objektfeststellungssignal generieren. Da auch dies ein zulässiges Einfahren in den Gefahrenbereich darstellt wird erfindungsgemäß auch diese erste Sequenz der Aktivierung von Objektfeststellungssignalen zugelassen, solange danach die Sensormittel für den Innenbereich ein Objektfeststellungssignal generieren. Entsprechendes gilt für das Herausfahren des Objekts, insbesondere des Fahrzeugs aus dem Gefahrenbereich.

Ein Beispiel hierfür ist ein Objekt in Form eines Gabelstaplers. Weist der Gabelstapler lange Gabeln auf, können diese bereits in den Zugangsbereich ragen und zur Aktivierung eines Objektfeststellungssignals des Sicherheitssensors führen, bevor das Fahrwerk des Gabelstaplers den Außenbereich erreicht und zur Aktivierung des Objektfeststellungssignals für den Außenbereich führt.

Da bei den erfindungsgemäßen Sequenzen als Voraussetzung für einen automatischer Wiederanlauf der Anlage eine hohe Fehlertoleranz gewährleistet ist, wird mit der erfindungsgemäßen Überwachungseinrichtung ein sicherer automatischer Wiederanlauf der Anlage bei gleichzeitiger Fehlertoleranz der Objektfeststellungssignale in den Sequenzen ermöglicht, so dass unnötige Stillstandszeiten der Anlage vermieden werden.

Diese Fehlertoleranz kann vorteilhaft weiter dadurch erhöht werden, dass während der Sequenzen das Objektfeststellungssignal für den Innenbereich und das Objektfeststellungssignal des Sicherheitssensors durch partielles Ein- und Ausfahren eines Objekts aktiviert und deaktiviert werden können ohne die Bedingung für den automatischen Wiederanlauf zu verletzen.

Bei der erfindungsgemäßen Überwachungseinrichtung werden gefahrbringende Objektbewegungen bei Ein- und Ausfahren von Objekten in den Gefahrenbereich und aus dem Gefahrenbereich heraus sicher erkannt, so dass sichergestellt ist, dass der automatische Wiederanlauf der Anlage dann nicht freigegeben wird, wenn sich noch eine Person oder ein Objekt im Gefahrenbereich befindet. In einem solchen Fall werden in der Steuereinheit die Sequenzen von Objektfeststellungssignalen als ungültig verworfen und der automatische Wiederanlauf wird nicht freigegeben. In diesem Fall muss eine Bedienperson den Wiederanlauf der Anlage manuell durch Betätigen eines Schaltmittels bewirken.

Gemäß einer ersten Ausgestaltung weisen die Sensormittel eine erste Induktionsschleife für Objektdetektionen im Außenbereich und eine zweite Induktionsschleife für Objektdetektionen im Innenbereich auf.

Die Induktionsschleifen werden an geeigneten Stellen im Boden einer Fabrikhalle oder dergleichen in welcher sich die Anlage befindet, verlegt.

Gemäß einer zweiten Ausgestaltung sind die Sensormittel von einem Radarsensor, einem Sensor mit einem anderen elektromagnetischen Sensorprinzip oder einem optoelektronischem Sensor gebildet, mittels dessen Objektdetektionen im Außenbereich und Innenbereich durchgeführt werden.

Die Strahlkeulen von Radarwellen der Radarsensoren sind so gewählt, dass diese den Innenbereich und den Außenbereich umfassen. In einer Auswerteeinheit des Radarsensors werden die empfangenen Signale separat für den Innenbereich und Außenbereich ausgewertet, wobei dann für den Innenbereich und Außenbereich separate Schaltsignale generiert werden. Insbesondere durch Analysieren von Bewegungsprofielen oder auch Objektkonturen können mit dem Radarsensor Personen von anderen Objekten unterschieden werden.

Gemäß einer vorteilhaften Weiterbildung weisen die Sensormittel Sensoren auf, die nach unterschiedlichen zweierlei Sensorprinzipien arbeiten, wie z.B. ein Radarsensor und ein Ultraschallsensor. Mit dem Ultraschallsensor werden Objektdetektionen im Innenbereich durchgeführt. Mit dem Radarsensor werden Objektdetektionen im Außenbereich oder im Außenbereich und Innenbereich durchgeführt.

Dabei können vorteilhaft der Ultraschallsensor und der Radarsensor in einem Gehäuse integriert sein.

Der Ultraschallsensor kann nur die Anwesenheit eines Objekts erfassen, ohne Unterscheidung ob es sich hierbei um eine Person oder ein anderes Objekt handelt. Die Unterscheidbarkeit von Personen und Objekten mittels des Radarsensors auch dann, wenn dieser nur im Außenbereich Objekte erfasst, ist zur Erfüllung des erforderlichen Sicherheitsniveaus ausreichend.

Ebenso kann als Sensormittel ein Laserscanner eingesetzt werden, mit dem Objekte mit einer Mindestgröße detektiert werden können. Mit derartigen Sensormitteln ist eine Unterscheidung von Objekten und Personen möglich. Diese Sensormittel umfassen zwei Schaltausgänge für die Ausgabe von Ausgangssignalen für den Innen- und Außenbereich.

Desweiteren kann ein horizontaler Lichtvorhang für die Unterscheidung von Personen und Objekten verwendet werden. Dieser wird optimalerweise in einer Höhe von 100 bis 300 mm über dem Boden eingerichtet. Hier wird einfacherweise der Lichtvorhang in Abschnitte aufgeteilt und mit dessen Signalen kann die Einfahrsequenz wie auch die Ausfahrtssequenz überprüft werden. Vorteilhaft ist bei der Verwendung eines sicheren Lichtvorhangs, dass dieser auch gleich die Zugangsabsicherung realisieren kann.

Gemäß einer weiteren Ausgestaltung weisen die Sensormittel wenigstens einen Kamerasensor auf.

Die Erfindung wird im Folgenden anhand der Zeichnungen erläutert. Es zweigen:
- Figur 1:: Erstes Ausführungsbeispiel der erfindungsgemäßen Überwachungseinrichtung.
- Figur 2:: Einzeldarstellung eines Lichtvorhangs für die Überwachungseinrichtung gemäß Figur 1.
- Figur 3:: Zweites Ausführungsbeispiel der erfindungsgemäßen Überwachungseinrichtung.
- Figur 4:: Schematische Darstellung eines Radarsensors mit in diesem integrierten Ultraschallsensor für die Überwachungseinrichtung gemäß Figur 3.
- Figur 5a-5l:: Einzelne Phasen des Ein- und Ausfahrens eines Gabelstaplers in den Gefahrenbereich bzw. aus dem Gefahrenbereich der Überwachungseinrichtung gemäß Figur 1.

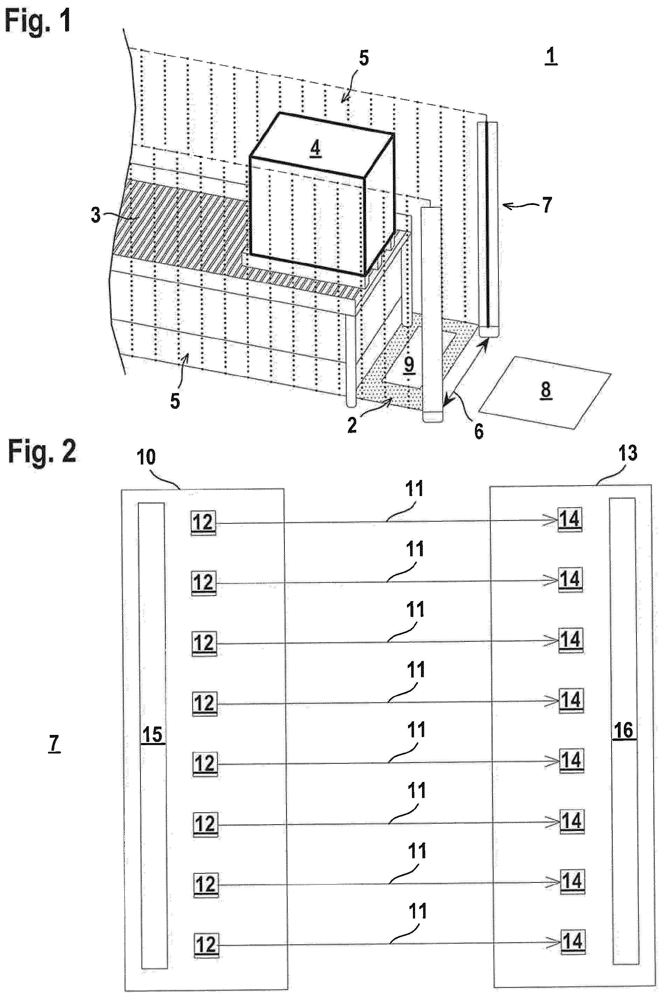

Figur 1 zeigt schematisch ein Ausführungsbeispiel der erfindungsgemäßen Überwachungseinrichtung 1.

Die Überwachungseinrichtung 1 dient zur Absicherung eines Gefahrenbereichs 2 an einer Anlage, die im vorliegenden Fall ein Förderband 3 aufweist, das von einer nicht dargestellten Steuereinheit gesteuert wird. Die Steuereinheit ist als Sicherheitssteuerung ausgebildet, die einen fehlersicheren Aufbau aufweist. Der fehlersichere Aufbau wird insbesondere durch eine redundante Rechnerstruktur und Ausgangsstruktur der Steuereinheit erhalten.

Auf dem Förderband 3 werden z.B. mit Waren beladene Paletten 4 transportiert, wie Figur 1 zeigt.

Wie Figur 1 weiter zeigt, ist die Anlage mit dem Gefahrenbereich 2 mit einer Umzäunung 5 gegen Zutritt geschützt. Nur an einer offenen Frontseite der Anlage befindet sich ein offener Zugangsbereich 6, der von einem Sicherheitssensor in Form eines Lichtvorhangs 7 überwacht wird.

Im Bodenbereich der Fabrikhalle, in welcher sich die Anlage befindet, sind als Sensormittel zwei Induktionsschleifen 8, 9 verlegt. Mit der ersten Induktionsschleife 8 wird ein Außenbereich außerhalb des Gefahrenbereichs 2 überwacht. Mit der zweiten Induktionsschleife 9 wird ein Innenbereich innerhalb des Gefahrenbereichs 2 überwacht.

Die Induktionsschleifen 8, 9 generieren binäre Schaltsignale. Ist ein Objekt im Außenbereich bzw. Innenbereich vorhanden, generiert die jeweilige Induktionsschleife 8, 9 ein Schaltsignal in Form eines Objektfeststellungssignals. Steht kein Objekt auf der Induktionsschleife 8, 9 generieren diese Schaltsignale, die einem freien Außenbereich bzw. Innenbereich entsprechen. Die Schaltsignale der Induktionsschleifen 8, 9 werden in die Steuereinheit eingelesen.

Figur 2 zeigt den Lichtvorhang 7. Der Lichtvorhang 7 umfasst eine Sendereinheit 10, in deren Gehäuse eine Reihenanordnung von Lichtstrahlen 11 emittierenden Sendern 12 in Form von Sendedioden angeordnet ist. Der Lichtvorhang 7 weist weiterhin eine Empfängereinheit 13 auf, in deren Gehäuse eine Reihenanordnung von Lichtstrahlen 11 empfangenden Empfängern 14 in Form von Empfangsdioden oder dergleichen vorgesehen ist.

Die Sendereinheit 10 und die Empfängereinheit 13 sind an gegenüberliegenden Rändern eines Überwachungsbereichs angeordnet. Bei freiem Überwachungsbereich treffen die von jeweils einem Sender 12 emittierten Lichtstrahlen 11 auf einen zugeordneten, gegenüberliegenden Empfänger 14. Ein Sender 12 und der hierzu zugeordnete Empfänger 14 bilden jeweils eine Strahlachse. Der Senderbetrieb wird durch eine Sendersteuerung 15 in der Sendereinheit 10 gesteuert und bewertet. Der Empfängerbetrieb wird durch eine Auswerteeinheit 16 in der Empfängereinheit 13 gesteuert. Die Sender 12 und Empfänger 14 der einzelnen Strahlachsen werden durch eine optische Synchronisierung des Lichtvorhangs 7 zyklisch einzeln oder zu mehreren nacheinander aktiviert.

In der Auswerteeinheit 16 werden die Empfangssignale der Empfänger 14 ausgewertet, um als Ausgangssignal ein binäres Schaltsignal zu erzeugen. Der erste Schaltzustand ist ein Objektfeststellungssignal, der zweite Schaltzustand entspricht einem freien Überwachungsbereich.

Der Lichtvorhang 7 bildet einen Sicherheitssensor für den Einsatz im Bereich der Sicherheitstechnik. Hierzu weist der Lichtvorhang 7 einen fehlersicheren Aufbau auf. Insbesondere weist die Auswerteeinheit 16 einen mehrkanaligen, redundanten Aufbau auf, beispielsweise in Form zweier sich zyklisch überwachender Rechnereinheiten.

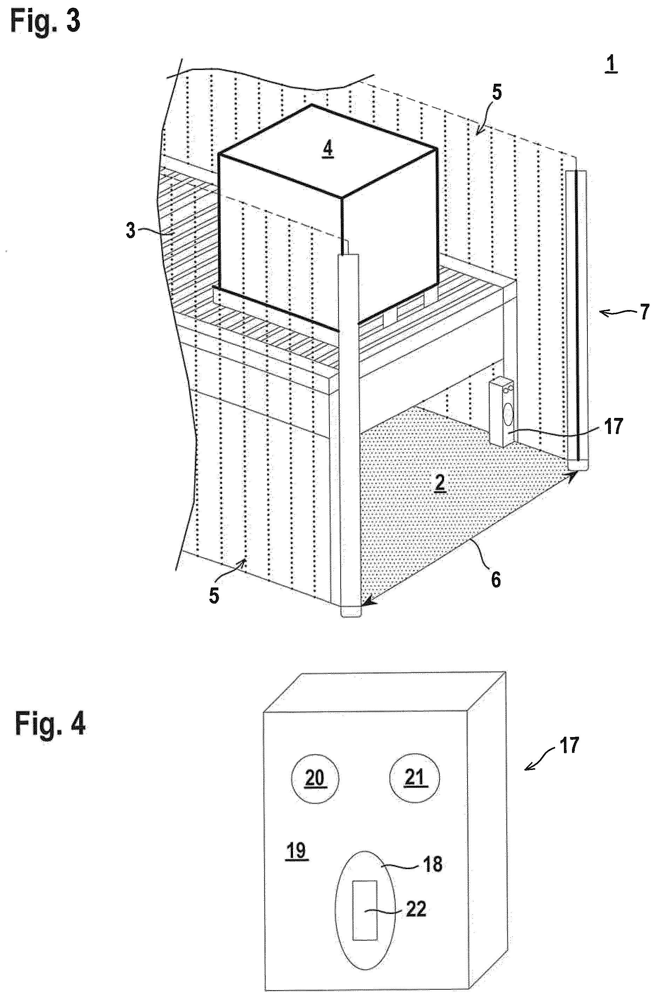

Figur 3 zeigt eine zweite Ausführungsform der erfindungsgemäßen Überwachungseinrichtung 1. Diese unterscheidet sich von den Überwachungseinrichtungen 1 gemäß Figur 1 nur dadurch, dass zur Überwachung des Außenbereichs und Innenbereichs als Sensormittel ein Radarsensor 17 vorgesehen ist.

Mit dem Radarsensor 17 erfolgt eine separate Überwachung des Außenbereichs und Innenbereichs, wobei für beide Überwachungen ein binäres Schaltsignal generiert wird, welche an die Steuereinheit ausgegeben werden. Mit dem Radarsensor 17 können Objekte von Personen unterschieden werden.

Vorteilhaft ist es zwei Sensorprinzipen zu kombinieren, z.B. ist im Radarsensor 17 ein Ultraschallsensor 18 integriert, wie Figur 4 zeigt. Der Ultraschallsensor 18 befindet sich im Sensorgehäuse 19 des Radarsensors 17, in welchem in bekannter Weise ein Radarstrahlen emittierendes Sendeelement 20 und ein Radarstrahlen empfangendes Empfangselement 21 und eine nicht dargestellte Steuerund Auswerteeinheit 16 zur Signalauswertung vorhanden sind. Der Ultraschallsensor 18 weist in bekannter Weise einen Ultraschallwellen emittierenden und empfangenen Ultraschallwandler 22 auf, dem eine nicht dargestellte Steuerund Auswerteeinheit 16 zur Signalauswertung zugeordnet ist.

In diesem Fall wird mit dem Ultraschallsensor 18 nur der Innenbereich 9 überwacht. Mit dem Radarsensor 17 kann der Außenbereich und gegebenenfalls zusätzlich der Innenbereich überwacht werden. Mit dem Ultraschallsensor 18 ist eine Unterscheidung von Objekten und Personen nicht möglich.

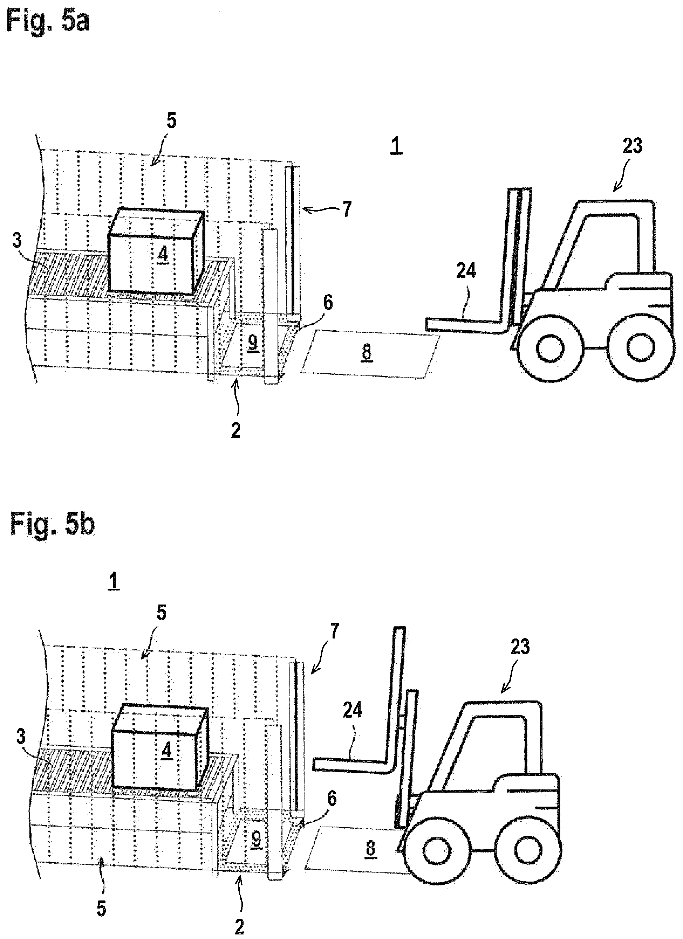

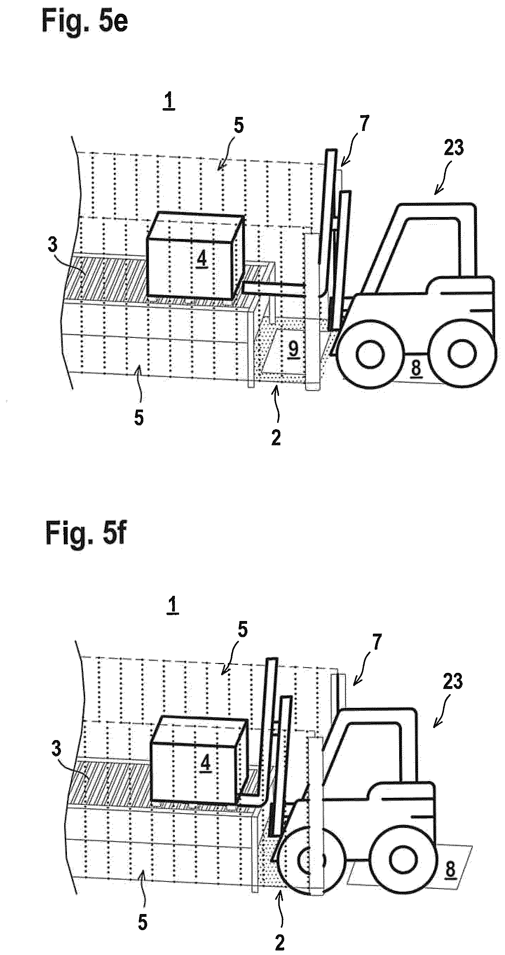

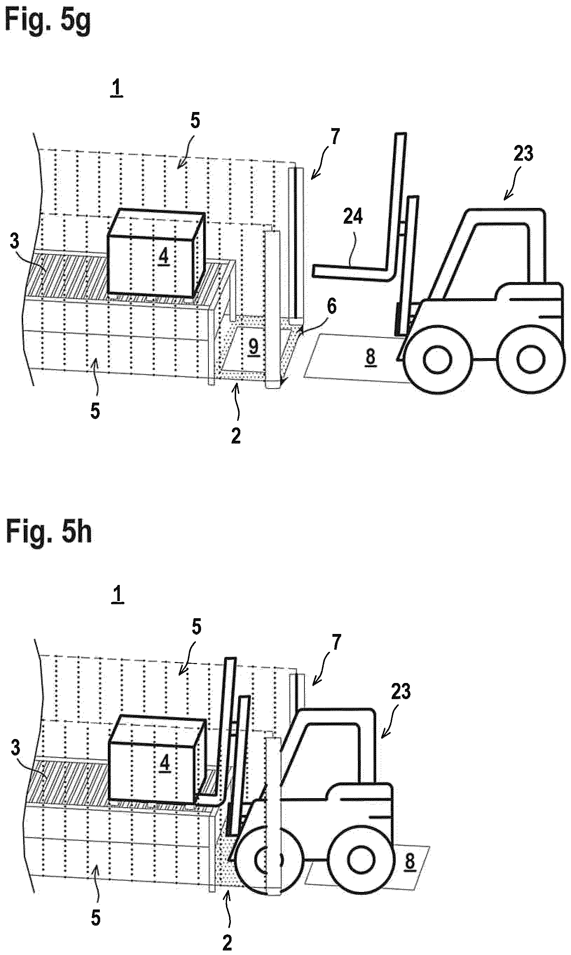

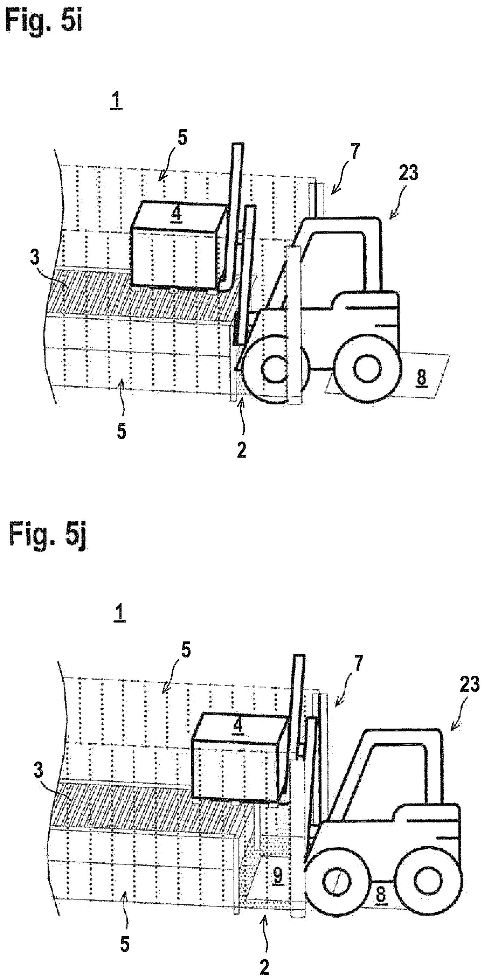

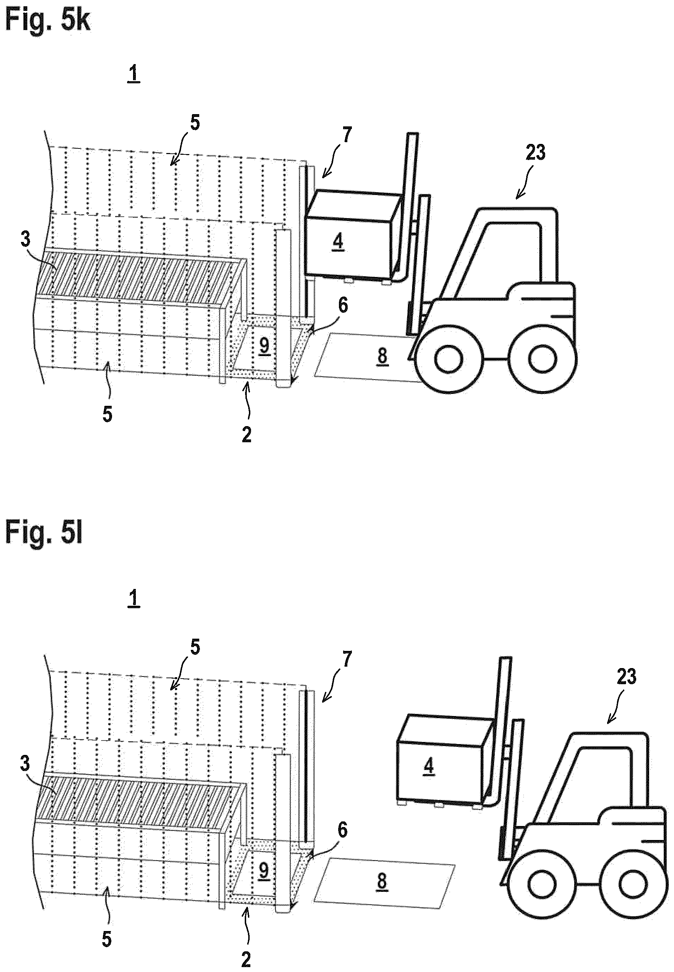

Wie die Figuren 5a bis 5e zeigen, können mit einem Fahrzeug in Form eines Gabelstaplers 23 Paletten 4 dem Förderband 3 zugeführt oder von diesem entnommen werden. Der Gabelstapler 23 weist hierzu in bekannter Weise an einer Frontseite Gabeln 24 auf.

Zur Anlieferung und Entnahme von Paletten 4 muss der Gabelstaplern 23 Zugangsbereich 6 und damit den Sicherheitssensor sowie den mit den Sensormitteln überwachten Außenbereich und Innenbereich passieren.

Die Funktionsweise der erfindungsgemäßen Überwachungseinrichtung 1 ist derart, dass mit dem Sicherheitssensor, d.h. dem Lichtvorhang 7 der Zugangsbereich 6 überwacht wird. Wird mit dem Sicherheitssensor im Zugangsbereich 6 ein Objekt detektiert, wird eine Sicherheitsfunktion derart ausgelöst, dass das vom Sicherheitssensor generierte Objektfeststellungssignal an die Steuereinheit ausgegeben wird, wodurch die Steuereinheit die Anlage, d.h. das Förderband 3 stillsetzt, wodurch die Anlage in einen sicheren Zustand überführt wird.

Erfindungsgemäß wird bei der erfindungsgemäßen Überwachungseinrichtung 1 ein automatischer Wiederanlauf der Anlage ermöglicht, wenn sichergestellt ist, dass sich kein Objekt, insbesondere keine Person die Sequenz vollständig durchlaufen hat.

Hierzu weist die Überwachungseinrichtung 1 die Sensormittel auf, mit denen separat der Außenbereich außerhalb des Gefahrenbereichs 2 und der Innenbereich innerhalb des Gefahrenbereichs 2 überwacht wird.

Ein automatischer Wiederanlauf der Anlage wird in der Steuereinheit nur dazu freigegeben, wenn mit den Sensormitteln und dem Sicherheitssensor eine gültige erste Sequenz von Objektfeststellungssignalen bei Einfahren eines Objekts (oder Eintreten einer Person) in den Gefahrenbereich 2 und danach eine gültige zweite Sequenz von Objektfeststellungssignalen bei Ausfahren des Objekts (oder Herausgehen der Person) aus dem Gefahrenbereich 2 registriert wird.

Erfindungsgemäß wird bei den Sequenzen keine strikte Reihenfolge von Aktivierungen oder Deaktivierungen von Objektfeststellungssignalen der Sensormittel für den Außenbereich, den Sicherheitssensor und der Sensormittel für den Innenbereich gefordert.

Vielmehr wird eine Toleranz in der Aktivierung und Deaktivierung von Objektfeststellungssignalen derart zugelassen, dass bei Einfahren des Objekts in den Gefahrenbereich 2 wahlweise zuerst das Objektfeststellungssignal der Sensormittel für den Außenbereich oder das Objektfeststellungssignal des Sicherheitssensors aktiviert wird. Entsprechendes gilt für die Sensormittel für den Innenbereich 9 und Außenbereich und den Sicherheitssensor bei Ausfahren des Objekts aus dem Gefahrenbereich 2.

Dadurch wird eine Toleranz der beiden Sequenzen bereitgestellt, die spezifischen Geometrien von Objekten, insbesondere Fahrzeugen, die in den Gefahrenbereich 2 ein- und ausfahren Rechnung tragen.

Je nach Konstruktion des Objekts, insbesondere des Fahrzeugs kann bei dessen Annäherung an den Gefahrenbereich 2 ein Objektfeststellungssignal des Sicherheitssensors aktiviert werden, bevor die Sensormittel für den Außenbereich ein Objektfeststellungssignal generieren. Dies kann bei dem Gabelstapler 23 der Fall sein. Weist der Gabelstapler 23 lange Gabeln 24 auf, können diese bereits in den Zugangsbereich 6 ragen und zur Aktivierung eines Objektfeststellungssignals des Sicherheitssensors führen, bevor das Fahrwerk des Gabelstaplers 23 den Außenbereich erreicht und zur Aktivierung des Objektfeststellungssignals für den Außenbereich führt. Da auch dies ein zulässiges Einfahren in den Gefahrenbereich 2 darstellt wird erfindungsgemäß auch diese erste Sequenz der Aktivierung von Objektfeststellungssignalen zugelassen, solange danach die Sensormittel für den Innenbereich ein Objektfeststellungssignal generieren. Entsprechendes gilt für das Herausfahren des Objekts, insbesondere des Fahrzeugs aus dem Gefahrenbereich 2.

Die einzelnen Phasen des Ein- und Ausfahrens des Gefahrenbereichs 2 sind in den Figuren 5a bis 5e dargestellt.

Zur Kontrolle, Steuerung und Freigabe eines automatischen Wiederanlaufs sind in der Steuereinheit ein Systemsignal SYS und ein Sequenzsignal SEQ definiert, die jeweils abhängig von Aktivierungen und Deaktivierungen von Objektfeststellungssignalen des Sicherheitssensors und der Sensormittel, im vorliegenden Fall der Induktionsschleifen 8 die Singnalzustände ON oder OFF einnehmen.

Die Figuren Figur 5a bis 5d zeigen eine gültige erste Sequenz für einen automatischen Wiederanlauf bei Einfahren des Gabelstaplers 23 in den Gefahrenbereich 2.

Figur 5a zeigt den Gabelstapler 23 in einer Anfangsposition außerhalb des Gefahrenbereichs 2 und außerhalb des Außenbereichs. Weder der Sicherheitssensor noch die Induktionsschleifen 8, 9 aktivieren ein Objektfeststellungssignal, da der Gabelstapler 23 mit diesen Einheiten nicht erfasst wird. Die Signale SYS und SEQ sind jeweils im Zustand OFF.

Figur 5b zeigt den Beginn der ersten Sequenz für einen automatischen Wiederanlauf. Der Gabelstapler 23 wird nur von der Induktionsschleife 8, die den Außenbereich überwacht, erfasst, so dass nur diese ein Objektfeststellungssignal generiert, nicht jedoch die Induktionsschleife 9 und der Sicherheitssensor. Das Signal SYS ist im Zustand ON, das Signal SEQ im Zustand OFF.

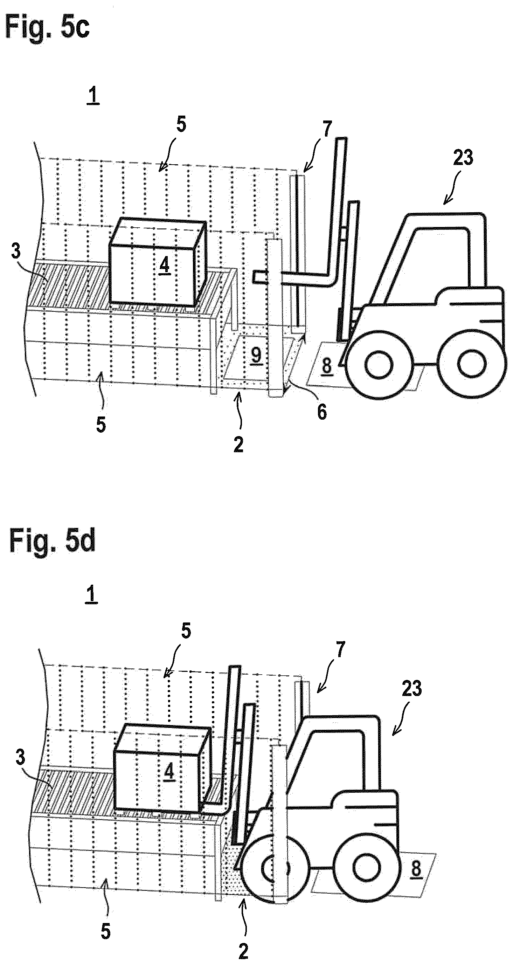

Figur 5c zeigt den weiter in den Gefahrenbereich 2 eingefahrenen Gabelstapler 23, dessen Gabeln 24 wenigstens einen der Lichtstrahlen 11 unterbrechen, so dass neben der Induktionsschleife 8 auch der Sicherheitssensor ein Objektfeststellungssignal generiert. Das Signal SYS ist im Zustand OFF, das Signal SEQ im Zustand OFF.

Figur 5d zeigt den weiter in den Gefahrenbereich 2 eingefahrenen Gabelstapler 23, so dass neben der Induktionsschleife 8 und dem Sicherheitssensor die Induktionsschleife 9 ein Objektfeststellungssignal ein Objektfeststellungssignal aktiviert. Das Signal SYS ist im Zustand OFF, das Signal SEQ im Zustand ON.

Die Figuren 5i bis 5l zeigen eine gültige Sequenz für das Ausfahren des Gabelstaplers 23 aus dem Gefahrenbereich 2. Dort erfolgt nacheinander die Deaktivierung der Objektfeststellungssignale der Induktionsschleife 9, des Sicherheitssensors und dann der Induktionsschleife 8, also in umgekehrter Reihenfolge wie die Aktivierung des Objektfeststellungssignals der Induktionsschleife 8, des Sicherheitssensor und der Induktionsschleife 9 bei Einfahren des Gabelstaplers 23 (erste Sequenz). Das Signal SYS bleibt dabei im Zustand OFF, das Signal SEQ im Zustand ON, bis der Gabelstapler 23 aus dem Bereich der Induktionsschleife 8 herausgefahren ist, wodurch die zweite Sequenz beendet ist und der automatische Wiederanlauf freigegeben wird.

Erfindungsgemäß liegt auch dann eine gültige erste Sequenz vor, wenn der Gabelstapler 23 längere Gabeln 24 aufweist, so dass dann der Sicherheitssensor ein Objektfeststellungssignal aktiviert, bevor der Gabelstapler 23 in den Bereich der ersten Induktionsschleife 8 einfährt, so dass diese erst danach ein Objektfeststellungssignal generiert. Entsprechend wird auch die dadurch geänderte zweite Sequenz der Deaktivierung von Objektfeststellungssignalen als gültig anerkannt, so dass auch in diesem Fall ein automatischer Wiederanlauf der Anlage erfolgt.

Erfindungsgemäß erfolgt auch dann ein automatischer Wiederanlauf der Anlage, wenn zwischen der ersten Sequenz des Einfahrens des Gabelstaplers 23 in den Gefahrenbereich 2 (Figur 5a bis 5d) und der zweiten Sequenz des Ausfahrens des Gabelstaplers 23 aus dem Gefahrenbereich 2 (Figur 5i bis 5l) ein partielles Ein- und Ausfahren des Gabelstaplers 23 in den oder aus dem Gefahrenbereich 2 erfolgt, wie in den Figuren 5e bis 5h dargestellt. Wesentlich hierbei ist, dass der Gabelstapler 23 dabei nicht den Bereich der ersten Induktionsschleife 8 verlässt. Während des partiellen Ein- und Ausfahrens des Gabelstaplers 23 bleibt das Signal SYS im Zustand OFF und das Signal SEQ im Zustand ON.

### Bezugszeichenliste

(1) Überwachungseinrichtung
(2) Gefahrenbereich
(3) Förderband
(4) Palette
(5) Umzäunung
(6) Zugangsbereich
(7) Lichtvorhang
(8) Induktionsschleife
(9) Induktionsschleife
(10) Sendereinheit
(11) Lichtstrahl
(12) Sender
(13) Empfängereinheit
(14) Empfänger
(15) Sendersteuerung
(16) Auswerteeinheit
(17) Radarsensor
(18) Ultraschallsensor
(19) Sensorgehäuse
(20) Sendeelement
(21) Empfangselement
(22) Ultraschallwandler
(23) Gabelstapler
(24) Gabel

## Patentansprüche

1. Überwachungseinrichtung (1) mit einem Sicherheitssensor mittels dessen ein Zugangsbereich (6) zu einem Gefahrenbereich (2) an einer von einer Steuereinheit gesteuerten Anlage überwacht wird, wobei Ausgangssignale des Sicherheitssensors der Steuereinheit zugeführt sind, wobei der Sicherheitssensor bei einem Obj ekteingriff im Zugangsbereich (6) ein Objektfeststellungssignal aktiviert, mittels dessen die Steuereinheit die Anlage stillsetzt, **dadurch gekennzeichnet, dass** Sensormittel vorhanden sind, deren Ausgangssignale der Steuereinheit zugeführt sind, wobei mit den Sensormitteln ein Innenbereich im Gefahrenbereich (2) und ein Außenbereich außerhalb des Gefahrenbereichs (2) überwacht wird und die Sensormittel bei einem Objekteingriff im Innenbereich und bei einem Objekteingriff im Außenbereich jeweils ein Objektfeststellungssignal aktivieren, dass nach Stillsetzen der Anlage mittels der Steuereinheit ein automatischer Wiederanlauf der Anlage dann durchgeführt wird, wenn zuerst in einer ersten Sequenz die Sensormittel für den Außenbereich und der Sicherheitssensor unabhängig von der Reihenfolge jeweils ein Objektfeststellungssignal aktivieren und danach die Sensormittel für den Innenbereich ein Objektfeststellungssignal aktiveren, und wenn in einer auf die erste Sequenz folgenden zweiten Sequenz die Sensormittel für den Innenbereich das Objektfeststellungssignal deaktivieren und danach die Sensormittel für den Außenbereich und der Sicherheitssensor unabhängig von der Reihenfolge jeweils das Objektfeststellungssignal deaktivieren.

2. Überwachungseinrichtung (1) nach Anspruch 1, **dadurch gekennzeichnet, dass** während der Sequenzen das Objektfeststellungssignal für den Innenbereich und das Objektfeststellungssignal des Sicherheitssensors durch partielles Ein- und Ausfahren eines Objekts aktiviert und deaktiviert werden können ohne die Bedingung für den automatischen Wiederanlauf zu verletzen.

3. Überwachungseinrichtung (1) nach einem der Ansprüche 1 oder 2, **dadurch gekennzeichnet, dass** für die beiden Sequenzen Zeitlimits eingehalten werden müssen, um den automatischen Wiederanlauf freizugeben.

4. Überwachungseinrichtung (1) nach einem der Ansprüche 1 bis 3, **dadurch gekennzeichnet, dass** die Aktivierungen und Deaktivierungen von Objektfeststellungssignalen während der Sequenzen durch ein in den Gefahrenbereich (2) ein- und ausfahrendes Fahrzeug verursacht werden.

5. Überwachungseinrichtung (1) nach Anspruch 4, **dadurch gekennzeichnet, dass** das Fahrzeug ein Gabelstapler (23) ist.

6. Überwachungseinrichtung (1) nach einem der Ansprüche 1 bis 5, **dadurch gekennzeichnet, dass** der Sicherheitssensor ein Lichtvorhang (7) ist.

7. Überwachungseinrichtung (1) nach einem der Ansprüche 1 bis 6, **dadurch gekennzeichnet, dass** die Sensormittel eine erste Induktionsschleife (8) für Objektdetektionen im Außenbereich und eine zweite Induktionsschleife (9) für Objektdetektionen im Innenbereich aufweisen.

8. Überwachungseinrichtung (1) nach einem der Ansprüche 1 bis 6, **dadurch gekennzeichnet, dass** die Sensormittel von einem Radarsensor (17) gebildet sind, mittels dessen Objektdetektionen im Außenbereich und Innenbereich durchgeführt werden.

9. Überwachungseinrichtung (1) nach einem der Ansprüche 1 bis 8, **dadurch gekennzeichnet, dass** die Sensormittel eine Kombination zweier Sensorprinzipien bilden.

10. Überwachungseinrichtung (1) nach Anspruch 9, **dadurch gekennzeichnet, dass** die Sensormittel einen Radarsensor (17) und einen Ultraschallsensor (18) aufweisen, wobei mit dem Ultraschallsensor (18) Objektdetektionen im Innenbereich durchgeführt werden und wobei mit dem Radarsensor (17) Objektdetektionen im Außenbereich oder im Außenbereich und Innenbereich durchgeführt werden.

11. Überwachungseinrichtung (1) nach Anspruch 10, **dadurch gekennzeichnet, dass** der Ultraschallsensor (18) und der Radarsensor (17) in einem Gehäuse integriert sind.

12. Überwachungseinrichtung (1) nach einem der Ansprüche 1 bis 6, **dadurch gekennzeichnet, dass** die Sensormittel wenigstens einen Kamerasensor aufweisen.

13. Überwachungseinrichtung (1) nach einem der Ansprüche 1 bis 6, **dadurch gekennzeichnet, dass** als Sensormittel ein Laserscanner vorhanden ist.

14. Überwachungseinrichtung (1) nach einem der Ansprüche 1 bis 6, **dadurch gekennzeichnet, dass** als Sensormittel ein horizontaler Lichtvorhang (7) vorhanden ist.

15. Überwachungseinrichtung (1) nach einem der Ansprüche 1 bis 5, **dadurch gekennzeichnet, dass** der Sicherheitssensor ein Lichtgitter, Sicherheitslaserscanner, Sicherheitsradarsensor oder ein Sicherheits-Aktiver IR-Sensor ist.
